# EUROPÄISCHE PATENTSCHRIFT

(11) **EP 0 828 097 B1**
(45) Veröffentlichungstag und Bekanntmachung des Hinweises auf die Patenterteilung: **13.02.2002**
(21) Anmeldenummer: 97115075.0
(22) Anmeldetag: 30.08.1997
(51) Int. Cl.: F16H 61/24, F16H 61/36

(54) **Schaltvorrichtung für ein Gangwechselgetriebe eines Kraftfahrzeuges**
Ratio selector apparatus for a change-speed vehicle gearbox
Dispositif de commande d'une boîte de vitesses de véhicule automobile

(30) Priorität: 09.09.1996 DE 19636506
(43) Veröffentlichungstag der Anmeldung: 11.03.1998
(73) Patentinhaber: DaimlerChrysler AG, 70567 Stuttgart (DE)
(72) Erfinder: Alber, Heinz, 70771 Leinfelden-Echterdingen (DE); Duckeck, Friedrich, 72760 Reutlingen (DE); Wörner, Günter, 71394 Kernen (DE)

(56) Entgegenhaltungen:
- EP-A- 0 579 532
- DE-A- 4 231 248
- DE-C- 4 427 076
- DE-C- 19 546 547
- FR-A- 2 008 471
- GB-A- 2 027 115
- PATENT ABSTRACTS OF JAPAN vol. 095, no. 006, 31. Juli 1995 & JP 07 071569 A (MITSUBISHI MOTORS CORP), 17. März 1995

## Beschreibung

Die Erfindung bezieht sich auf eine Schaltvorrichtung für ein Gangwechselgetriebe eines Kraftfahrzeuges gemäß dem Oberbegriff von Patentanspruch 1.

Aus der DE 42 31-248 A1 ist bereits eine solche Schaltvorrichtung für ein Gangwechselgetriebe eines Kraftfahrzeuges bekannt. Bei dieser ist eine Schaltwelle dreh- und axialverschiebbar in einem Schaltgehäuse angeordnet. Diese Schaltwelle ist mit einem getriebeseitigen Schalthebel verbunden, an welchem ein Ende eines Seilzuges gelenkig befestigt ist. Das andere Ende des Seilzuges ist mit einem Handschalthebel kinematisch verbunden. Ferner ist an dem Schalthebel eine Zusatzmasse befestigt, die das Massenträgheitsmoment der Schaltwelle derart erhöht, dass Kraftspitzen der am Handschalthebel messbaren Schaltkraft während einzelner Schaltvorgänge abgebaut werden.

Bei einer weiteren Schaltvorrichtung für ein Gangwechselgetriebe eines Kraftfahrzeuges (DE 38 39 319 C2) sind eine Kabineneinheit zur Aufnahme der Schaltbefehle eines Schalthebels, der um zwei zueinander senkrechte Achsen schwenkbar ist, eine am Getriebe angebrachte Getriebeeinheit zur Abgabe der Schaltbefehle an das Getriebe und Schaltkabel verwendet, die die Kabineneinheit mit der Getriebeeinheit verbinden und die Schaltbewegung von der Kabineneinheit auf die Getriebeeinheit übertragen, wobei durch die Getriebeeinheit bei einer Schwenkbewegung des Schalthebels um eine Achse eine Getriebegasse ausgewählt und bei einer Schwenkbewegung des Schalthebels um die andere Achse eine Einrückbewegung zum Einrücken einer Schaltkupplung ausgeführt wird und wobei an ein die Schaltbewegung ausführendes Bauteil der Getriebeeinheit ein bewegbares Betätigungselement gekuppelt ist, auf das die Schaltbewegung übertragen wird. Um ein Getriebeschaltgerät zu schaffen, das sich durch ein angenehmes und dem Schaltgefühl eines Schaltgestänges ähnliches Schaltgefühl auszeichnet, ist das Betätigungselement als Massekörper mit einer solchen Masse ausgebildet, daß es der Einrückbewegung in ihrer Anfangsphase durch seine Trägheit einen merklichen Widerstand entgegensetzt und in ihrer Endphase aufgrund seines Drehimpulses die Einrückbewegung merklich unterstützt und dadurch das elastische Verhalten des Schaltkabels teilweise kompensiert.

Aus der DE 39 32 815 C2 ist ein Kraftübertragungsgelenk für das Schaltgestänge eines Kraftfahrzeuggetriebes bekannt, das aus einem Kreuzgelenkkäfig mit einer Ausnehmung zur verdrehfesten Lagerung eines darin mittels eines Haltegliedes fixierten Kulissensteines zur Aufnahme eines Zapfens einer Schaltstange, gummielastischen Dämpfern zwischen dem Kulissenstein und der Ausnehmung in den Schaltrichtungen und aus einer ungedämpften Lagerung des Kulissensteines in der Ausnehmung in den Wählrichtungen besteht. Um in Wählrichtung ein Wählspiel zu vermeiden und eine kostengünstige Fertigung zu ermöglichen, ist eine Ausgestaltung dahingehend getroffen, daß der Kreuzgelenkkäfig eine rechteckige Ausnehmung mit zwei parallelen Flächen und für die Wählrichtungen zwei Keilflächen zur Aufnahme des entsprechend ausgebildeten Kulissensteines aufweist, wobei für den Kulissenstein eine selbstnachstellende Halterung am Kreuzgelenkkäfig vorgesehen ist.

Gegenstand der nicht vorveröffentlichten DE 195 23 141 A1 ist eine Schaltvorrichtung für ein Gangwechselgetriebe eines Kraftfahrzeuges mit einer dreh- und axialverschiebbar in.einem Schaltgehäuse angeordneten Schaltwelle, welche einen zu ihr drehfesten Schalthebel aufweist, der mit einem Handschalthebel kinematisch verbunden ist, und mit einer auf den Schalthebel einwirkenden Zusatzmasse, die das Massenträgheitsmoment der Schaltwelle derart erhöht, daß Kraftspitzen der am Handschalthebel meßbaren Schaltkraft während einzelner Schaltvorgänge abgebaut werden. Die Zusatzmasse ist für sich gegenüber einem Gehäuseteil schwenkbar gelagert und mit dem Schalthebel getrieblich verbunden. Die Schwenklagerachse liegt parallel zur Drehachse der Schaltwelle.

Die der Erfindung zugrunde liegende Aufgabe besteht im wesentlichen darin, bei einer Schaltvorrichtung der eingangs genannten Art den Abbau der Kraftspitzen beim Schaltvorgang weiter zu verbessern.

Die erläuterte Aufgabe ist gemäß der Erfindung mit den Merkmalen von Patentanspruch 1 in vorteilhafter Weise gelöst.

Bei der Schaltvorrichtung nach der Erfindung werden durch den Einfluss der Zusatzmasse sowohl die Kraftamplitude (Servoeffekt der Massewirkung) als auch die beim Einspuren ansonsten spürbaren Kraftspitzen abgebaut. Durch das oder die elastischen Dämpfungsglieder werden zusätzlich auch die beim Einspuren erzeugten Kraftspritzen beseitigt. Ferner wird darüber hinaus der dynamische Effekt der Zusatzmasse sowohl verstärkt als auch von den Wählbewegungen der Schaltvorrichtung mit Sicherheit abgekoppelt.

Bei der Schaltvorrichtung nach der Erfindung gemäß Patentanspruch 1 ist durch die Kombination von Zusatzmasse und Dämpfungsgliedern ein optimaler Verlauf für den Schaltkomfort erzielt, wie dies am Handschalthebel fühlbar wird. Physikalisch bedeutet die Anordnung von Zusatzmasse und Dämpfungsglied am Schalthebel der Schaltwelle einen Zustand, bei dem die Kraftwirkung der Masse über die Elastizität Rückwirkungen auf den Schalthebel (Kraftschwankungen) vermeidet. D.h., dass die beim Schaltablauf aufgetretenen kleineren Kraftschwankungen am Schalthebel nicht mehr zu spüren sind. Dieser Effekt wird noch durch das zusätzliche Dämpfungsglied bei der Ausgestaltung der Schaltvorrichtung nach der Erfindung gemäß Patentanspruch 3 verstärkt.

Die Patentansprüche 4 bis 6 haben weitere vorteilhafte Ausgestaltungen der Schaltvorrichtung nach der Erfindung zum Gegenstand.

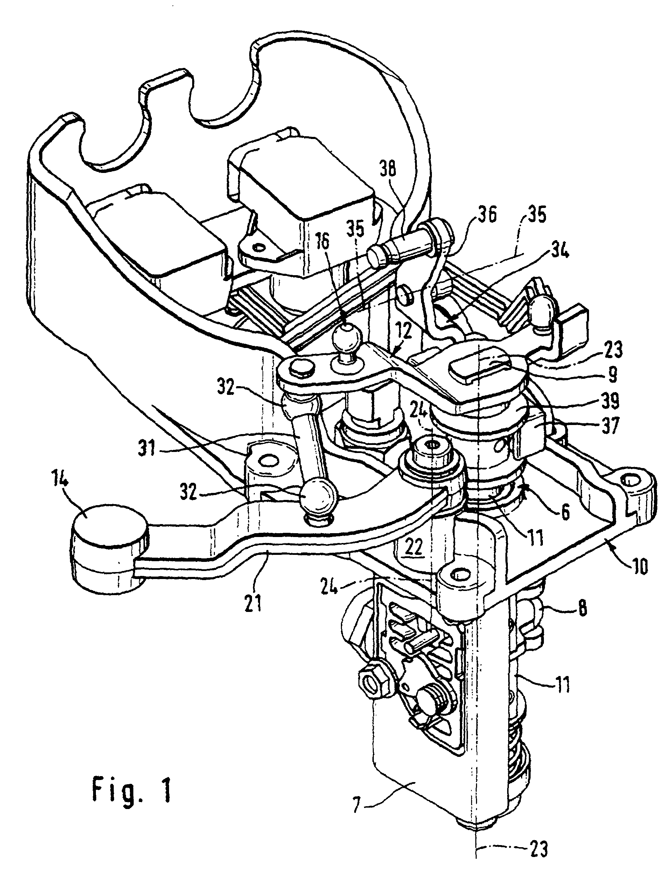

Die Erfindung ist nachstehend anhand eines in der Zeichnung schematisch dargestellten Ausführungsbeispieles näher beschrieben. In der Zeichnung bedeuten
- Fig. 1: einen getriebeseitigen Teil einer Schaltvorrichtung nach der Erfindung in einem teilmontierten Zustand ohne Dämpfungsglieder in perspektivischer Darstellung,

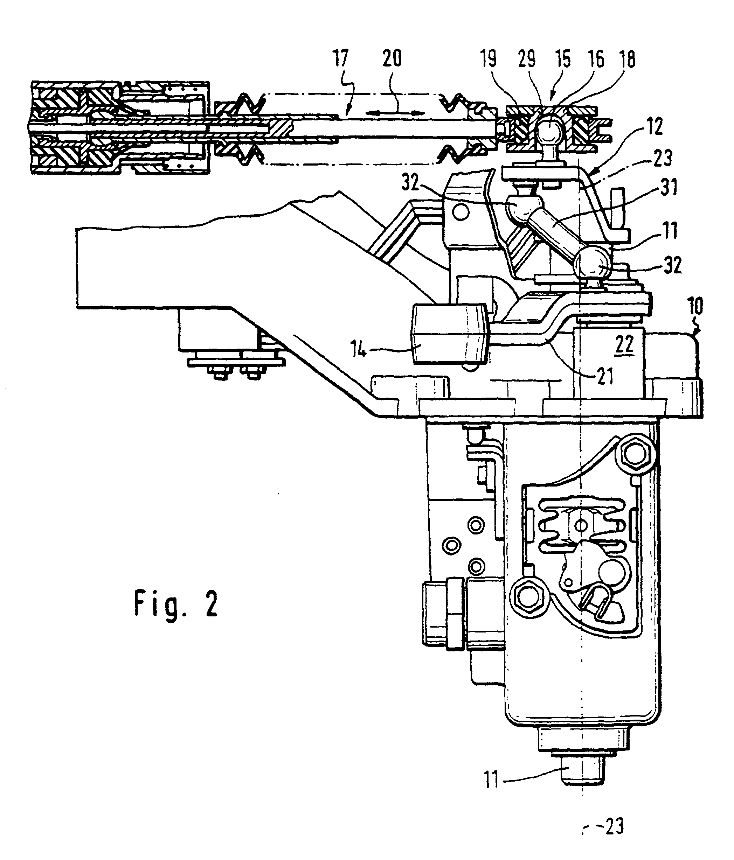

- Fig. 2: die Schaltvorrichtung von Fig. 1 in einer Seitenansicht in einem durch ein Schaltgestänge mit einem Dämpfungsglied vervollständigterem Zustand,

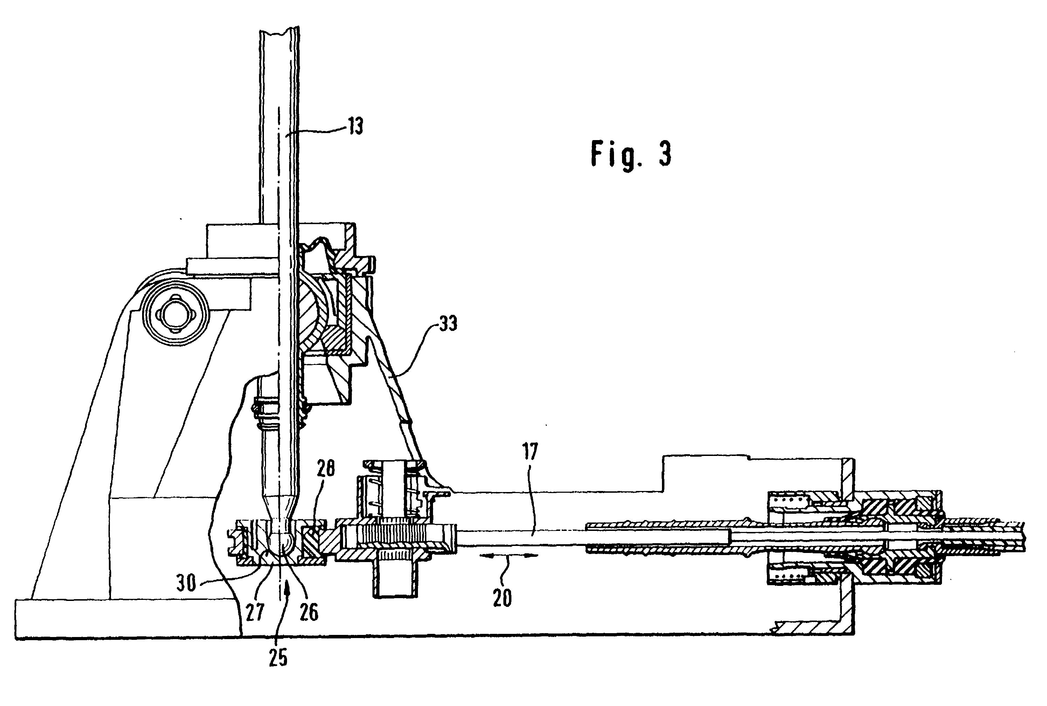

- Fig. 3: einen den Handschalthebel aufweisenden Teil der Schaltvorrichtung nach der Erfindung in einem Schnitt in einer vertikalen Längsebene eines Schaltgehäuseteiles,

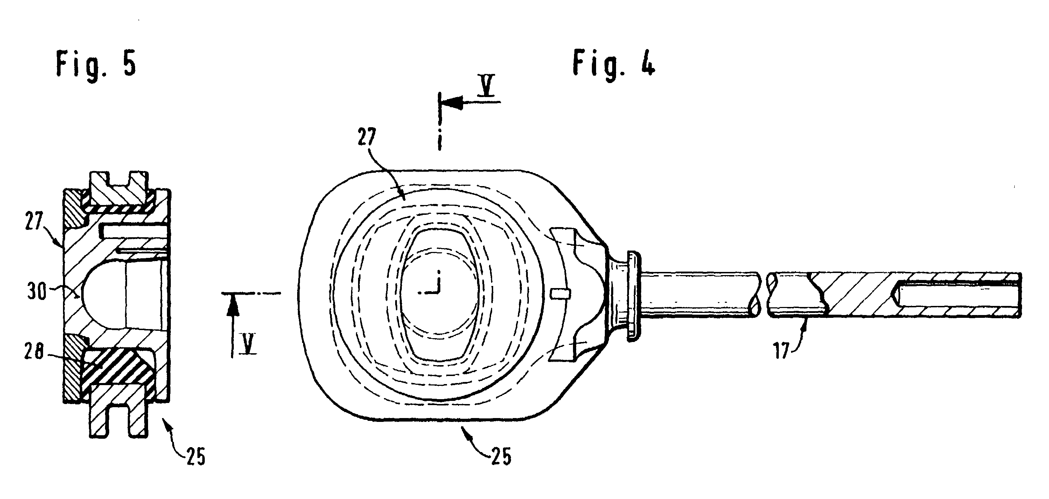

- Fig. 4: ein Gelenk mit einem elastischen Dämpfungsglied zur kinematischen Verbindung des Handschalthebels mit einem zum getriebeseitigen Teil der Schaltvorrichtung von Fig. 2 führenden Schaltgestänge, und
- Fig. 5: einen Schnitt durch das Gelenk der Fig. 4 nach Linie V-V.

Ein Schaltgehäuseteil 10 ist in Form eines Abschlußdeckels mit einem zentralen Duchgang 6 für eine Schaltwelle 11 sowie mit einer senkrecht - in Einbaulage nach unten - abgehenden Lagerkonsole 7 ausgebildet, wobei die durch je eine Wälzlageranordnung im Durchgang 6 und am unteren Ende der Lagerkonsole 7 drehbar und axialverschiebbar in bezug auf ihre Drehachse 23-23 gegenüber dem Schaltgehäuseteil 10 gelagerte Schaltwelle 11 im Bereich der Lagerkonsole 7 mit einem Schaltfinger 8 zum Betätigen von nicht mehr dargestellten Schaltstangen versehen ist, welche zum Betätigen der üblichen Zahnradkupplungen zum jeweiligen Ankuppeln eines Losrades an seine Getriebewelle verwendet sind.
Der Schaltfinger 8 ist zum Ein- und Ausrücken der Gänge (Zahnradkupplungen) durch einen Schalthebel 12 betätigbar, welcher mit dem oberen Ende 9 der Schaltwelle 11 fest verbunden ist und eine Gelenkhälfte 16 eines Gelenkes 15 in Form eines Kugelkopfes aufweist, welcher in die korrespondierende Kugelpfanne 29 der anderen Gelenkhälfte 18 des Gelenkes 15 eingreift, welches zur Anlenkung eines flexiblen Schaltkabels 17 zur Übertragung von Zug- und Druckkräften an den Schalthebel 12 verwendet ist. Das Schaltkabel 17 wird durch einen Handschalthebel 13 zu Ein- und Ausrückbewegungen gemäß dem Richtungspfeil 20 veranlaßt, wobei das Schaltkabel 17 mit der Gelenkhälfte 18 unter Zwischenschaltung eines im Kraftfluß der Schaltkräfte liegenden ringförmigen Dämpfungsgliedes 19 verbunden ist.

Ein an seinem freien Ende eine Zusatzmasse 14 halternder Ausleger 21 ist an einem Auflager 22 des Schaltgehäuseteiles 10 um eine zur Drehachse 23-23 parallele Schwenkachse 24-24 schwenkbar gelagert und mit seinem Gewicht abgestützt.

Zur kinematischen Verbindung von Schalthebel 12 und Ausleger 21 ist ein Lenker 31 unter Zwischenschaltung je eines Kugelgelenkes 32 verwendet.

Der Handschalthebel 13 ist durch ein Kugelgelenk 25 mit dem Schaltkabel 17 verbunden, dessen eine Gelenkhälfte 26 in Form eines Kugelkopfes bewegungsfest mit dem Handschalthebel 13 verbunden ist und in die korrespondierende Kugelpfanne 30 der anderen Gelenkhälfte 27 eingreift.

Der Handschalthebel 13 ist in bekannter Weise derart um eine erste Schwenkachse an einem Lagerbock 33 schwenkbar gelagert, daß diese Schwenkbewegungen in die Ein- und Ausrückbewegungen 20 des Schaltkabels 17 umgesetzt werden. Das Schaltkabel 17 ist mit der Gelenkhälfte 27 unter Zwischenschaltung eines im Kraftfluß der Ein- und Ausrückkräfte liegenden ringförmigen elastischen Dämpfungsgliedes 28 verbunden.

Der Schaltfinger 8 ist zum Ankoppeln an die jeweilige Schaltstange in den Längsrichtungen der Drehachse 23-23 durch einen doppelarmigen Wählhebel 34 verlagerbar, welcher am Schaltgehäuseteil 10 um eine zur Drehachse 23-23 senkrechte Schwenkachse 35-35 schwenkbar gelagert ist.

Der eine Hebelarm 36 des Wählhebels 34 ist durch ein Gelenk - von dem nur ein Gelenkzapfen 38 dargestellt ist - über ein flexibles Wählkabel zur Übertragung von Zug- und Druckkräften ebenfalls mit dem Handschalthebel 13 kinematisch verbunden.

Der Handschalthebel 13 ist um eine zweite Schwenkachse schwenkbar am Lagerbock 33 so gelagert, daß Schwenkbewegungen um die erste Schwenkachse zur Betätigung ausschließlich des Schaltkabels 17 - dagegen um die zweite Schwenkachse zur Betätigung ausschließlich des nicht mehr dargestellten Wählkabels führen.

Der zweite Hebelarm 37 des Wählhebels 34 ist durch eine Gelenkanordnung 39 - welche Schwenkbewegungen in hin- und hergehende Bewegungen umwandelt - mit der Schaltwelle 11 verbunden.

Aufgrund dieser Anordnung sind sowohl die Zusatzmasse 14 als auch die Dämpfungsglieder 19 und 28 ausschließlich auf das Schaltungssystem zum Ein- und Ausrücken der Gänge zur Wirkung gebracht - von dem Wählsystem zur Auswahl jeweils einer der Schaltstangen (Schaltgassen) jedoch vollständig entkoppelt.

## Patentansprüche

1. Schaltvorrichtung für ein Gangwechselgetriebe eines Kraftfahrzeuges, mit einer dreh- und axialverschiebbar in einem Schaltgehäuse (10) angeordneten Schaltwelle (11), welche einen zu ihr drehfesten Schalthebel (12) aufweist, der mit einem Handschalthebel (13) kinematisch verbunden ist, und mit einer auf den Schalthebel (12) einwirkenden Zusatzmasse (14), die das Massenträgheitsmoment der Schaltwelle (11) derart erhöht, dass Kraftspitzen der am Handschalthebel (13) meßbaren Schaltkraft während einzelner Schaltvorgänge abgebaut werden,
wobei weiter die kinematische Verbindung zwischen dem Schalthebel (12) und dem Handschalthebel (13) ein Gelenk (15) mit einer dem Schalthebel (12) als einem Teil der Verbindung zugeordneten Gelenkhälfte (16) und einer einem zum Handschalthebel (13) führenden Gestänge (17) als einem weiteren Teil der Verbindung zugeordneten Gelenkhälfte (18) aufweist,
**dadurch gekennzeichnet,**
**dass** die Zusatzmasse (14) an einem Ausleger (21) angeordnet ist, der an einem Gehäuseteil (22) des Schaltgehäuses (10) mit Abstand zur Drehachse (23-23) der Schaltwelle (11) schwenkbar gelagert ist und mit dem Schalthebel (12) getrieblich verbunden ist,
und **dass** die eine Gelenkhälfte (18) mit dem ihr zugeordneten Teil (17) der Verbindung durch ein im Kraftfluss der Schaltkräfte liegendes elastisches Dämpfungsglied (19) wirkungsmäßig verbunden ist.

2. Schaltvorrichtung nach Anspruch 1,
**dadurch gekennzeichnet,**
**dass** die Schwenklagerachse (24-24) des Auslegers (21) parallel zur Drehachse (23-23) der Schaltwelle (11) liegt.

3. Schaltvorrichtung nach Anspruch 1 oder 2,
**dadurch gekennzeichnet,**
**dass** die kinematische Verbindung zwischen dem Schalthebel (12) dem Handschalthebel (13) ein Gelenk (25) mit einer dem Handschalthebel (13) als einem Teil der Verbindung zugeordneten Gelenkhälfte (26) und einer einem zuum Schalthebel (12) führenden Gestänge (17) als einem weiteren Teil der Verbindung zugeordneten Gelenkhälfte (27) aufweist, und dass die eine Gelenkhälfte (27) mit dem ihr zugeordneten Teil (17) der Verbindung durch ein im Kraftfluss der Schaltkräfte liegendes zusätzliches elastisches Dämpfungsglied (28) wirkungsmäßig verbunden ist.

4. Schaltvorrichtung nach einem der Ansprüche 1 bis 3,
**dadurch gekennzeichnet,**
**daß** für das Gelenk (15 bzw. 25) ein Kugelgelenk verwendet und die die Kugelpfanne (29 bzw. 30) aufweisende Gelenkhälfte (18 bzw. 27) mit dem Dämpfungsglied (19 bzw. 28) verbunden ist.

5. Schaltvorrichtung nach einem der Ansprüche 1 bis 4,
**dadurch gekennzeichnet,**
**daß** für das Gestänge (17) ein flexibles Kabel zur Übertragung von Zug- und Druckkräften verwendet ist.

6. Schaltvorrichtung nach einem der Ansprüche 1 bis 5,
**dadurch gekennzeichnet,**
**daß** für die getriebliche Verbindung zwischen dem zur Schaltwelle (11) drehfesten Schalthebel (12) und dem Ausleger (21) ein Lenker (31) verwendet ist.

## Claims

1. Switchgear for a gear unit, in a vehicle, with a control shaft (11) which has a clutch lever (12) that is rotationally fixed in relation to it and is kinematically connected to a gear stick (13), the said control shaft (11) being able to rotate and move axially in a gear casing (10), and with an additional mass (14) which increases the inertia moment of the control shaft (11) such that peaks of force of the measurable switching force on the gear stick (13) are reduced during separate gear changes,
further whereby the kinematic connection between the clutch lever (12) and the gear stick (13) has a link (15) with, as part of the connection, a link half (16) associated with the clutch lever (12) and, as a further part of the connection, an associated link half (18) of a linkage (17) leading to the gear stick (13),
**characterized in that**
the additional mass (14) is disposed on an arm (21) which is born, such that it can pivot, on a casing section (22) of the gear casing (10), with a gap in relation to the axis of rotation (23-23) of the control shaft (11), and is connected, in terms of gearing transmission, to the clutch lever (12),
and **in that** a link half is effectively connected, by means of a springy attenuator (19) lying in the line of flow of the gearing forces, to the part (17) of the connection associated with it.

2. Switchgear in accordance with claim 1,
**characterized in that**
the pivoting axis (24-24) of the arm (21) lies parallel to the axis (23-23) of rotation of the control shaft (11).

3. Switchgear in accordance with claim 1 or 2,
**characterized in that**
the kinematic connection between the clutch lever (12) (and) the gear stick (13) has a link (25) with a link-half (26) associated with the gear stick (13) as a part of the connection and a link-half (27), as a further part of the connection, associated with a linkage (17) leading to the clutch lever (12).

4. Switchgear in accordance with one of claims 1 to 3,
**characterized in that**
a ball pivot is used for the link (15 or 25) and **in that** the link-half (18 and 27 respectively) having the ball-cup (29 or 30 respectively) is connected to the attenuator (19 or 28 respectively).

5. Switchgear in accordance with one of claims 1 to 4,
**characterized in that**
a flexible cable, to transmit pull and thrust forces, is used for the linkage (17).

6. Switchgear in accordance with one of claims 1 to 5,
**characterized in that**
a guide rod (31) is used for the gearing connection between the clutch lever (12), which is rotationally fixed in relation to the control shaft (11), and the arm (21).

## Revendications

1. Dispositif de commutation pour une boîte de vitesses dans un véhicule automobile, comprenant un arbre de commutation (11) agencé avec faculté de rotation et de déplacement axial dans un boîtier (10), ledit arbre comportant un levier de commutation (12) relié solidairement en rotation à lui-même et relié de manière cinématique à un levier de commutation manuel (13), et comprenant une masse additionnelle (14) qui agit sur le levier de commutation (12) et qui augmente le moment d'inertie de masse de l'arbre de commutation (11) de manière à annuler les pointes de la force de commutation mesurables au niveau du levier de commutation manuel (13) pendant les opérations de commutation individuelles,
dans lequel la liaison cinématique entre le levier de commutation (12) et le levier de commutation manuel (13) comprend en outre une articulation (15) avec une première moitié d'articulation (16) associée au levier de commutation (12) à titre de première partie de la liaison, et avec une deuxième moitié d'articulation (18) associée à une tringlerie (17) qui mène au levier de commutation manuel (13) à titre de deuxième partie de la liaison,
**caractérisé en ce que**
la masse additionnelle (14) est agencée sur un bras (21) qui est monté en pivotement sur une partie (22) du boîtier de commutation (10) à distance de l'axe de rotation (23-23) de l'arbre de commutation (11) et qui est relié en termes d'entraînement au levier de commutation (12), et **en ce que** ladite deuxième moitié d'articulation (18) conjointement avec la partie (17) de la liaison qui lui est associée, est relié en termes de fonctionnement par l'intermédiaire d'un organe d'amortissement élastique (19) situé dans le flux des efforts de commutation.

2. Dispositif de commutation selon la revendication 1, **caractérisé en ce que** l'axe du palier de pivotement (24-24) du bras (21) est situé parallèlement à l'axe de rotation (23-23) de l'arbre de commutation.

3. Dispositif de commutation selon l'une ou l'autre des revendications 1 et 2, **caractérisé en ce que** la liaison cinématique entre le levier de commutation (12) et le levier de commutation manuel (13) comprend une articulation (25) avec une première moitié d'articulation (26) associée au levier de commutation manuel (13), à titre de première partie de la liaison, et une deuxième moitié d'articulation (27) associée à une tringlerie (17) qui mène au levier de commutation (12), à titre de deuxième partie de la liaison, et **en ce que** la première moitié d'articulation (27), avec la partie (17) de la liaison qui lui est associée, est reliée en termes d'entraînement via un organe d'amortissement élastique (28) additionnel disposé dans le flux des forces de commutation.

4. Dispositif de commutation selon l'une des revendications 1 à 3, **caractérisé en ce que** pour l'articulation (15 ; 25) on utilise une articulation sphérique, et **en ce que** la moitié d'articulation (18 ; 27) qui comporte la coupelle sphérique (29 ; 30) est reliée à l'organe d'amortissement (19 ; 28).

5. Dispositif de commutation selon l'une des revendications 1 à 4, **caractérisé en ce que** l'on utilise pour la tringlerie (17) un câble flexible destiné à la transmission de forces de traction et de compression.

6. Dispositif de commutation selon l'une des revendications 1 à 5, **caractérisé en ce que** pour la liaison en termes d'entraînement entre le levier de commutation (12) solidaire en rotation de l'arbre de commutation (11) et le bras (21), on utilise une bielle (31).
